# FASCICULE DE BREVET EUROPEEN

(11) **EP 1 231 704 B1**
(45) Date de publication et mention de la délivrance du brevet: **18.08.2010**
(21) Numéro de dépôt: 02290258.9
(22) Date de dépôt: 04.02.2002
(51) Int. Cl.: H02M 3/28, H02M 7/10

(54) **Convertisseur d'énergie**
Energiewandler
Energy converter

(30) Priorité: 05.02.2001 FR 0101508; 06.03.2001 FR 0103037; 12.06.2001 FR 0107681
(43) Date de publication de la demande: 14.08.2002
(73) Titulaire: FAIVELEY TRANSPORT, 93200 Saint-Denis (FR)
(72) Inventeur: Kalvelage, Gérard, 37150 Civray de Touraine (FR); Aubin, Philippe, 37210 Parcay-Meslay (FR)
(74) Mandataire: Novagraaf Technologies

(56) Documents cités:
- DE-A- 10 010 278
- US-A- 3 419 786
- US-A- 4 339 704
- AYYANAR R ET AL: "Full-load-range-ZVS hybrid DC-DC converter with two full-bridges for high-power battery charging" TELECOMMUNICATION ENERGY CONFERENCE, 1999. INTELEC '99. THE 21ST INTERNATIONAL COPENHAGEN, DENMARK 6-9 JUNE 1999, PISCATAWAY, NJ, USA,IEEE, US, 6 juin 1999 (1999-06-06), page 8pp XP010351371 ISBN: 0-7803-5624-1

## Description

L'invention se rapporte à un convertisseur d'énergie électrique associant en série et/ou en parallèle une pluralité de transformateurs.

On connaît déjà des convertisseurs associant des transformateurs en série ou en parallèle.

Ainsi, les documents US 4 339 704 et US 3 419 786 décrivent un convertisseur comprenant un enroulement primaire et plusieurs enroulements secondaires. Le convertisseur est alimenté par une tension alternative. Les enroulements secondaires sont connectés en parallèle sur deux conducteurs, chaque conducteur présentant des diodes connectées en série. Ainsi, les deux conducteurs sont reliés entre eux, entre leurs diodes respectives, par un enroulement secondaire.

Le convertisseur décrit dans le document US 3 419 786 comprend, sur chaque conducteur, N+1 diodes pour N enroulements secondaires. Il comporte par ailleurs N interrupteurs connectés en série avec chaque enroulement secondaire.

Le convertisseur décrit dans le document US 4 339 704 comprend, sur chaque conducteur, N+2 diodes connectées en série, deux diodes étant disposées entre les connexions d'enroulements secondaires successifs. N-1 interrupteurs relient les deux conducteurs entre deux diodes connectées successivement en séries. Ces deux convertisseurs permettent de faire varier la tension en sortie d'un facteur N en associant les enroulements secondaires en série ou en parallèle.

Ils présentent toutefois l'inconvénient de nécessiter l'utilisation de nombreux interrupteurs et ne tolèrent pas la tolérance aux pannes au niveau du circuit primaire. Par ailleurs, ces convertisseurs ne peuvent fonctionner avec une tension continue en entrée, et la plage de variation de tension reste limitée.

Le convertisseur décrit par Rajapandian Ayyanar et Ned Mohan dans une publication du 6 juin 1999 intitulée « Full Load Range ZVS Hybrid DC-DC converter with two full bridges for high power battery charging » est un convertisseur d'énergie électrique hybride comprenant deux transformateurs T1 et T2 et un ensemble de moyens de commutation Ta+, Ta-, Tb+ et Tb-. Ce convertisseur correspond au préambule de la revendication 1.

Mais ce convertisseur ne peut fonctionner qu'avec une tension continue en entrée, et ne peut fournir qu'une tension continue en sortie.

L'invention vise à résoudre ces problèmes en présentant un convertisseur de réalisation simple nécessitant un nombre réduit d'interrupteurs tout en permettant d'obtenir une plage de variation de tension en sortie égale ou supérieure, et en tolérant les pannes simples.

De plus, le convertisseur selon l'invention peut fonctionner avec une tension d'entrée ou de sortie continue ou alternative.

A cet effet, un premier objet de l'invention est un convertisseur d'énergie électrique comprenant :
- N transformateurs comprenant chacun un enroulement primaire et un enroulement secondaire,
- un circuit primaire relié à deux bornes d'entrée, sur lequel sont connectés les enroulements primaires des transformateurs,
- un circuit secondaire relié à deux bornes de sortie, sur lequel sont connectés les enroulements secondaires des transformateurs,
le circuit primaire du convertisseur comprenant un ensemble de moyens de commutation connectés aux N enroulements primaires,
le convertisseur d'énergie comprenant un ensemble de moyens de commutation connectés aux N enroulements secondaires, et des moyens de commande des moyens de commutation d'au moins un des circuits primaire ou secondaire, les moyens de commutation étant connectés de sorte que l'on peut associer les N enroulements primaires en série et/ou parallèle avec les N enroulements secondaires respectivement en parallèle et/ou série en utilisant les moyens de commande.

Dans une première variante, le circuit primaire comprend un générateur de courant qui alimente les bornes d'entrée et le circuit secondaire comprend un générateur de tension connecté en parallèle aux bornes de sortie.

Dans une deuxième variante, le circuit primaire comprend un générateur de tension connecté en parallèle sur les bornes d'entrée et le circuit secondaire comprend un générateur de courant relié aux bornes de sortie.

Dans un mode de réalisation, chaque circuit primaire ou secondaire peut adopter l'une des deux configurations duales suivantes :
- la première configuration comprend deux conducteurs électriques connectés en parallèle entre les bornes d'entrée ou de sortie, chaque conducteur comportant au moins N+1 moyens de commutation en série, les deux conducteurs étant reliés entre eux, entre leurs moyens de commutation respectifs, par un enroulement primaire ou secondaire,
- la deuxième configuration comprend N+1 conducteurs électriques connectés en parallèle entre les bornes d'entrée ou de sortie, chaque conducteur comportant au moins deux moyens de commutation en série, les conducteurs étant reliés entre eux deux à deux entre leurs moyens de commutation respectifs par un enroulement primaire ou secondaire.

Un autre objet de l'invention est un procédé de commande d'un convertisseur selon l'invention, dans lequel le circuit primaire présente la première configuration.

Ce procédé comprend les étapes consistant à déplacer un motif de commutation successivement le long des paires de moyens de commutation du circuit primaire et, pour chaque paire de moyens de commutation, à inverser éventuellement l'état d'un des moyens de commutation de la paire ou successivement l'état des deux moyens de commutation de la paire.

Une paire de moyens de commutation correspond alors à deux moyens de commutation connectés avant ou après un même enroulement.

D'autres objets et avantages apparaîtront au cours de la description suivante, en référence aux dessins annexés, donnés à titre d'exemples non limitatifs, dans lesquels :
- la figure 1 représente un schéma d'un mode de réalisation d'un convertisseur selon l'invention ;
- la figure 2 représente un schéma d'un deuxième mode de réalisation de l'invention ;
- la figure 3 représente une variante de la figure 1 ;
- la figure 4 représente un troisième mode de réalisation de l'invention ;
- la figure 5 représente une courbe de la tension d'entrée en fonction du temps, les figures 5a, 5b, 5c représentant schématiquement les connexions en série et ou en parallèle adoptées par les enroulements des transformateurs en fonction de la tension représentée sur la courbe de la figure 5 ;
- les figures 6 et 7 illustrent deux modes de commutation d'un convertisseur selon l'invention.

Le convertisseur d'énergie électrique selon l'invention comprend :
- N transformateurs (P_{N}, S_{N}) comprenant chacun un enroulement primaire P_{N} et un enroulement secondaire S_{N}, N étant un nombre entier,
- un circuit primaire 1 relié à deux bornes d'entrée 2, 3, sur lequel sont connectés les enroulements primaires P_{N} des transformateurs,
- un circuit secondaire 4 relié à deux bornes de sortie 5, 6, sur lequel sont connectés les enroulements secondaires S_{N} des transformateurs.

Chaque circuit primaire 1 et secondaire 4 comprend au moins 2N+2 moyens de commutation I_{N} et I'_{N}.

Le convertisseur comprend également des moyens de commande 7 des moyens de commutation I_{N} et l'_{N} d'au moins un des circuits primaire ou secondaire, les moyens de commutation étant connectés de sorte que l'on peut associer les N enroulements primaires ou secondaires en série et/ ou parallèle en utilisant les moyens de commande.

Les moyens de commande 7 peuvent commander soit uniquement les moyens de commutation du circuit primaire 1 ou du circuit secondaire 4, soit commander à la fois les moyens de commutation des circuits primaire 1 et secondaire 4.

Les moyens de commutation I_{N} et l'_{N} permettent d'ouvrir et de fermer le circuit sur lequel ils sont connectés.

Ces moyens de commutation peuvent être des interrupteurs unidirectionnels ou bidirectionnels, tels que des diodes, des IGBT, des thyristors, des triac, des transistors à effet de champ, des transistors bipolaires, des contacteurs, des contacts, des GTO, IGCT, MOS, ou similaires.

Dans une première variante, le circuit primaire 1 comprend un générateur de courant qui alimente les bornes d'entrée 2, 3. Il s'agit par exemple d'un enroulement. Le circuit secondaire 4 comprend alors un générateur de tension connecté en parallèle aux bornes de sortie 5, 6. Il s'agit par exemple d'un condensateur.

Dans une deuxième variante, le circuit primaire 1 comprend un générateur de tension (par exemple un condensateur ) connecté en parallèle sur les bornes d'entrée 2, 3 et le circuit secondaire 4 comprend un générateur de courant relié aux bornes de sortie 5, 6 (par exemple un enroulement).

Les circuits primaire 1 et secondaire 4 peuvent adopter l'une de deux configurations duales décrites ci-après.

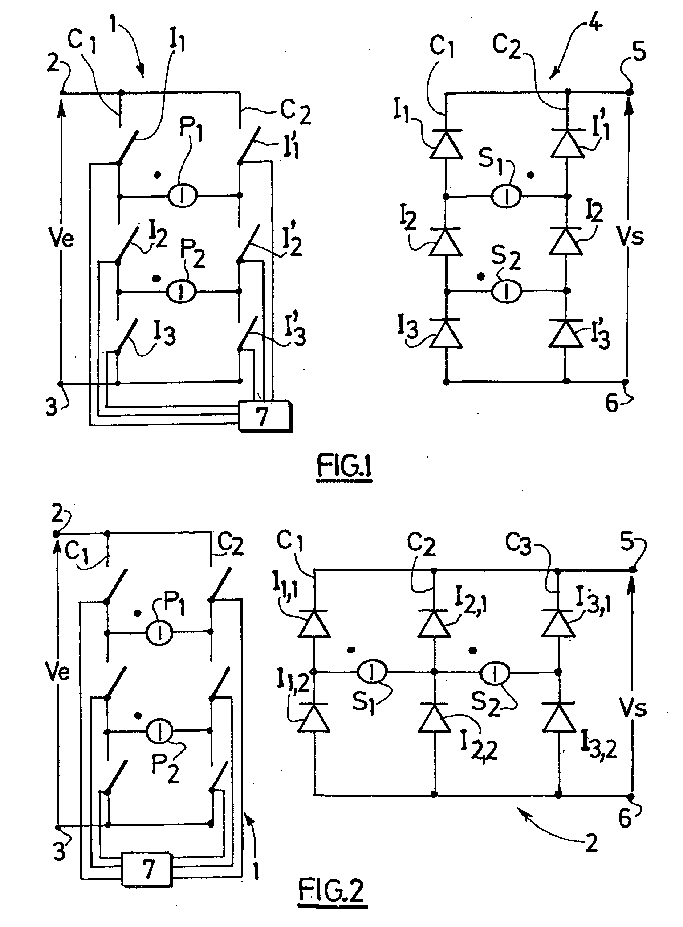

La première configuration est décrite en référence à la figure 1, qui représente un convertisseur dont les deux circuits primaire 1 et secondaire 4 adoptent cette première configuration.

Dans l'exemple représenté, le convertisseur comprend N = 2 transformateurs.

Les circuits primaire 1 et secondaire 4 comprennent chacun respectivement deux conducteurs électriques C₁, C₂ connectés en parallèle entre les bornes d'entrée 2, 3 ou de sortie 5, 6.

Chaque conducteur C₁, C₂ comporte N+1 interrupteurs en série I_{N} et l'_{N} respectivement.

Les deux conducteurs C₁, C₂ du circuit primaire sont reliés entre eux, entre leur interrupteurs respectifs I_{N} et I'_{N}, par un enroulement primaire P_{N}. Ainsi, les enroulements primaires P_{N} sont connectés en parallèle entre les deux conducteurs C₁, C₂.

De même, les deux conducteurs C₁, C₂ du circuit secondaire sont reliés entre eux, entre leurs interrupteurs respectifs I_{N} et I'_{N}, par un enroulement secondaire S_{N}, de sorte que les enroulements secondaires S_{N} sont connectés en parallèle entre les deux conducteurs C₁, C₂.

Dans le mode de réalisation représenté sur la figure 1, les interrupteurs I_{N} et l'_{N} du circuit secondaire sont des diodes. Ces diodes sont toutes connectées dans le même sens.

Les points représentés sur les figures 1 à 4 au niveau des enroulements primaire P_{N} et secondaire S_{N}, symbolisent le sens des enroulements.

Ainsi, sur la figure 1, les enroulements P₂, S₂ sont dans le même sens, tandis que les enroulements P₁ et S₁ sont en sens inverse l'un de l'autre. Cette configuration permet d'obtenir un branchement en parallèle des enroulements du circuit secondaire lorsque les enroulements du circuit primaire sont en série, et vice versa.

Pour un convertisseur à N transformateurs, lorsque les circuits primaire et secondaire présentent la même configuration, un enroulement sur deux du circuit secondaire est inversé par rapport aux enroulements correspondant du circuit primaire.

La deuxième configuration, duale de la première, est décrite en référence à la figure 2, qui représente un convertisseur dont le circuit primaire 1 présente la première configuration, et le circuit secondaire 4 adopte cette deuxième configuration.

Cette dualité entre les deux circuits implique les propriétés suivantes:
- lorsqu'un interrupteur est fermé au primaire, l'interrupteur correspondant est ouvert au secondaire, et réciproquement ;
- les formes d'ondes en tension sur les interrupteurs primaires deviennent les formes d'ondes des courants dans les interrupteurs secondaires, et réciproquement ;
- lorsque les enroulements primaires sont reliés en série, les enroulements secondaires sont reliés en parallèle, et réciproquement.

Dans l'exemple représenté sur la figure 2, le convertisseur comprend N = 2 transformateurs.

Le circuit primaire 1 est identique à celui de la figure 1.

Le circuit secondaire 4 comprend N+1 conducteurs électriques C_{N} connectés en parallèle aux bornes de sortie 5, 6 du circuit secondaire.

Chaque conducteur C_{N} du circuit secondaire comporte deux interrupteurs I_{N,1} et l_{N,2} en série, les conducteurs C_{N} étant reliés entre eux deux à deux entre leurs interrupteurs respectifs par un enroulement secondaire S_{N}.

Dans le mode de réalisation représenté sur cette figure, les interrupteurs I_{N,1} et I_{N,2} du circuit secondaire sont des diodes.

Les configurations des circuits primaire 1 et secondaire 4 étant duales l'une de l'autre, il n'est pas nécessaire d'inverser le sens d'un enroulement sur deux pour obtenir un branchement en parallèle des enroulements du circuit secondaire lorsque les enroulements du circuit primaire sont en série, et vice versa.

Ainsi, les points symbolisant le sens des enroulements sont tous du même côté pour le convertisseur de la figure 2.

Pour un convertisseur à N transformateurs, lorsque les circuits primaire et secondaire présentent des configurations duales, tous les enroulements sont dans le même sens.

Pour obtenir la réversibilité du convertisseur, il faudrait associer des interrupteurs en parallèle sur les diodes du circuit secondaire, les commandes de ces interrupteurs seraient obtenues par dualité des commandes primaires. On peut également utiliser des interrupteurs I_{N,1} et l_{N,2} bidirectionnels.

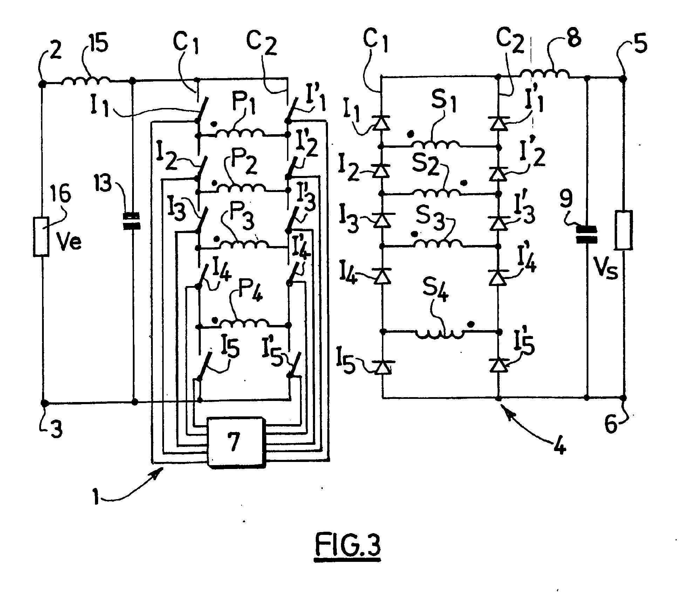

La figure 3 décrit une variante du mode de réalisation de la figure 2. Sur ces figures, les mêmes références désignent les mêmes composants.

Dans cette variante, le circuit primaire 1 adopte la première configuration et le circuit secondaire 4 adopte la deuxième configuration.

Le circuit secondaire 4 est identique à celui décrit pour la figure 1, les mêmes éléments étant indiqués par les mêmes références.

Les deux conducteurs C₁, C₂ du circuit secondaire sont par ailleurs reliés à un enroulement 8 en série et à une capacité 9 en parallèle.

Du fait de la présence d'un enroulement 8, le circuit secondaire dispose d'un générateur de courant.

Le circuit primaire 1 est sensiblement identique à celui décrit pour la figure 1, les mêmes références se rapportant aux mêmes composants.

Les deux conducteurs C₁, C₂ du circuit primaire sont connectés en parallèle avec une capacité 13.

La capacité 13 est elle-même connectée en série avec un enroulement 15 et un générateur de tension 16. Ce dernier est connecté entre les bornes d'entrée 2, 3.

Du fait de la présence de la capacité 13, le circuit primaire dispose d'un générateur de tension.

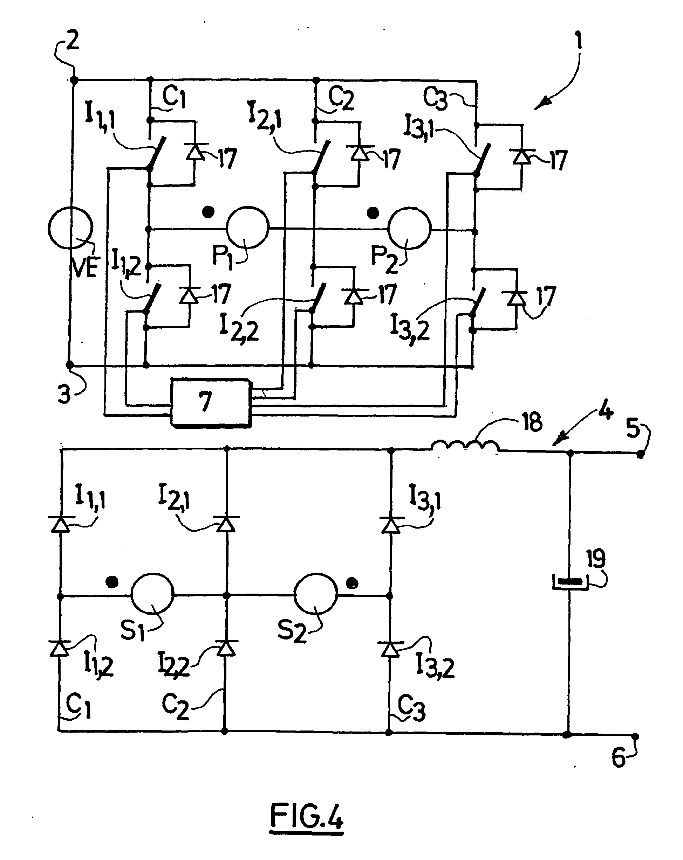

Un troisième mode de réalisation est décrit en référence à la figure 4.

Dans ce mode de réalisation, les circuits primaire et secondaire adoptent la deuxième configuration pour un nombre de transformateurs N = 2. Ainsi, le sens d'un des enroulements secondaires, ici S₂, est inversé par rapport au sens de l'enroulement primaire correspondant P₂ et des autres enroulements P₁, S₁.

Chaque interrupteur I_{N,1} et I_{N,2} du circuit primaire 1 est connecté en parallèle avec une diode 17, afin de pouvoir fonctionner de façon bidirectionnelle.

Les interrupteurs I_{N,1} et l_{N,2} du circuit secondaire sont des diodes.

Le circuit primaire est alimenté par un générateur de tension (VE). Le circuit secondaire est relié à un générateur de courant (enroulement 18).

L'enroulement 18 est monté en série avec la borne positive de sortie 5, une capacité 19 est montée en parallèle entre les bornes de sortie 5, 6.

Le fonctionnement des différents modes de réalisation de l'invention est maintenant décrit.

On définit Ve la tension entre les bornes d'entrée 2, 3 et Vs la tension entre les bornes de sortie 5, 6.

Le fonctionnement du convertisseur dans lequel les circuits primaire et secondaire sont dans la première configuration est maintenant décrit en référence à la figure 1.

Lorsque les deux enroulements P₁ et P₂ sont en parallèle, par exemple lorsque les interrupteurs I₃ et I'₁ du circuit primaire 1 sont ouverts et les autres interrupteurs fermés, si la borne d'entrée 2 est positive, les côtés des enroulements reliés à la borne 2 sont positifs également. Ces côtés correspondent aux points sur la figure 1.

De part la structure d'un transformateur, les côtés correspondants des enroulements secondaires S₁ et S₂, symbolisés par les points, sont également positifs, ce qui induit la circulation du courant dans le circuit secondaire 4, les enroulements secondaires étant alors en série.

Les enroulements primaires P₁ et P₂ étant en parallèle, la tension au niveau de chaque enroulement est égale à Ve. La tension au niveau de chaque enroulement secondaire S₁ et S₂ est par conséquent également égale à Ve, si l'on considère que les rapports de transformation sont égaux à 1, d'où une tension de sortie Vs = 2 Ve.

Lorsque les enroulements P₁ et P₂ sont en série, par exemple quand les interrupteurs I₁, I'₂ et I₃ sont fermés et les autres ouverts, le côté de l'enroulement P₁ (marqué par le point sur la figure) relié à la borne d'entrée 2 (positive) est positif, et le côté marqué par le point de l'enroulement P₂ est négatif. La tension au niveau de chaque enroulement P₁, P₂ est alors égale à Ve/2.

Par conséquent, le côté marqué par le point de l'enroulement S₁ est positif, tandis que le côté marqué par le point de l'enroulement S₂ est négatif, de sorte que seules les diodes I'₁, l'₂, I₂, I₃ sont passantes et que S₁ et S₂ sont en parallèle, la tension au niveau de chaque enroulement S₁, S₂ étant égale à Ve/2.

Ainsi, la tension de sortie est Vs = Ve/2.

Ainsi, pour un convertisseur comprenant N transformateurs présentant des rapports de transformation égaux à 1, il est possible de faire varier la tension de sortie Vs entre Ve/N et N.Ve. La dynamique du circuit électronique est alors de N².

Il est bien sûr possible que les enroulements primaires P₁, P₂ soient en parallèle en ouvrant les interrupteurs I₁ et l'₃ et en fermant les autres interrupteurs. Les tensions appliquées aux bornes des transformateurs sont alors inversées, ce qui permet d'appliquer une tension de fonctionnement alternative nécessaire aux transformateurs.

Avec une tension Ve d'entrée alternative, il est possible d'obtenir une tension Vs de sortie continue en commutant à une fréquence convenable les interrupteurs du circuit primaire par rapport à la fréquence de variation de la tension alternative d'entrée. Il est alors nécessaire que tous les interrupteurs du circuit primaire soient bidirectionnels.

Ce type de montage présente l'avantage de pouvoir être utilisé avec une tension d'entrée fortement variable (par exemple de 100 Volts à 1600 Volts) et de réguler la tension de sortie à une valeur fixe.

Plus le nombre N de générateurs est élevé, plus on augmente la plage de variation des tensions.

L'équilibrage des tensions des transformateurs est garanti, étant donné que lorsque les enroulements primaires sont en parallèle, les enroulements secondaires sont en série et réciproquement.

Le fonctionnement du convertisseur dans lequel les circuits primaire et secondaire sont respectivement dans la première et la deuxième configuration est maintenant décrit en référence à la figure 2.

Le fait que les deux configurations soient duales l'une de l'autre implique que lorsque les enroulements P₁, P₂ du circuit primaire sont en parallèle, les enroulements S₁, S₂ sont en série et vice versa.

Ainsi, lorsque P₁ et P₂ sont en parallèle et que leur côté marqué par un point est positif, le côté correspondant de S₁ et S₂ est positif également, de sorte que seules les diodes I_{1,1}, I_{3,2} sont passantes et S₁, S₂ sont en série.

Si P₁ et P₂ sont en parallèle mais avec une polarité inversée, alors S₁ et S₂ sont en série avec une polarité inversée, les diodes I_{1,2}, I_{3,1} uniquement étant passantes.

De même que pour le convertisseur précédent, il est possible d'utiliser en entrée un générateur de tension continue ou alternative et d'obtenir en sortie une tension continue.

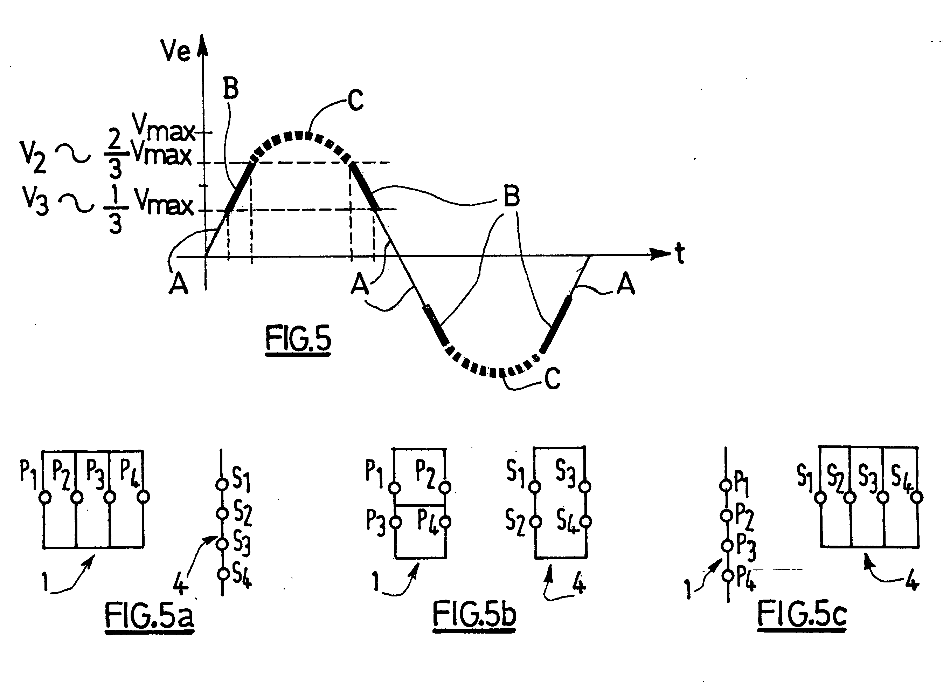

Nous allons décrire le fonctionnement du circuit de la figure 3 dans le cas d'une tension alternative d'entrée sinusoïdale, telle que représentée sur la figure 5.

On définit par Vmax la tension Ve maximale, et par V1 et V2 des tensions d'entrée sensiblement égales à environ 1/3 Vmax et 2/3 Vmax respectivement.

On peut alors découper la courbe de la tension sinusoïdale d'entrée en plusieurs zones:
- une zone A correspondant à la plage de tension : 0 ≤ Ve ≤ V1 ;
- une zone B correspondant à V1 ≤ Ve ≤ V2 ;
- une zone C correspondant à V2 ≤ Ve ≤ Vmax.

Lorsque Ve se situe dans la zone A, la tension d'entrée est alors assez faible, et peut être supportée par chaque transformateur. Les interrupteurs I_{N} et l'_{N} du circuit primaire sont alors par exemple commutés de façon à associer tous les enroulements primaires P_{N} en parallèle, associant par conséquent les enroulements secondaires S_{N} en série tel que représenté sur la figure 5a.

Ainsi, à chaque enroulement P_{N}, S_{N} est appliquée une tension Ve faible , et tous les enroulements S_{N} sont traversés par un même courant faible.

Lorsque Ve se situe dans la zone B, la tension d'entrée est alors plus élevée, et ne peut plus être supportée intégralement par chaque transformateur. Les interrupteurs I_{N} et l'_{N} du circuit primaire sont alors par exemple commutés de façon à associer les enroulements primaires P_{N} deux à deux en parallèle, associant par conséquent les enroulements secondaires S_{N} en série deux à deux tel que représenté sur la figure 5b.

Ainsi, à chaque enroulement P_{N}, S_{N} est appliqué une tension Ve/2, et tous les enroulements S_{N} sont traversés par un courant dont l'intensité a été divisée par deux.

Lorsque Ve se situe dans la zone C, la tension d'entrée est encore plus élevée, et ne peut plus être supportée intégralement par chaque transformateur. Les interrupteurs I_{N} et l'_{N} du circuit primaire sont alors par exemple commutés de façon à associer tous les enroulements primaires P_{N} en série, associant par conséquent les enroulements secondaires S_{N} en parallèle tel que représenté sur la figure 5c.

Ainsi, à chaque enroulement P_{N}, S_{N} est appliqué une tension Ve/N, et tous les enroulements S_{N} sont traversés par un courant dont l'intensité a été divisée par N.

Pour un circuit à N transformateurs, les possibilités d'association des enroulements primaires en parallèle et/ ou en série sont beaucoup plus nombreuses et permettent de réguler la tension de sortie en fonction de l'utilisation, par exemple à une valeur fixe.

Le mode de réalisation représenté sur la figure 4 est maintenant décrit ci-après.

Lorsque les enroulements primaires P₁, P₂ sont en parallèle, par exemple quand les interrupteurs I_{1,1}, I_{3,1}, I_{2,2} sont fermés et les autres ouverts, le côté de l'enroulement P₁ marqué par un point étant alors positif, et le côté de l'enroulement P2 marqué par un point étant négatif. Ainsi, les côtés marqués d'un point des enroulements secondaires S₁, S₂ sont alors respectivement positif et négatif. Cette polarité implique que seules les diodes I_{1,1} et I_{3,2} sont passantes et que les enroulements S₁, S₂ sont en série.

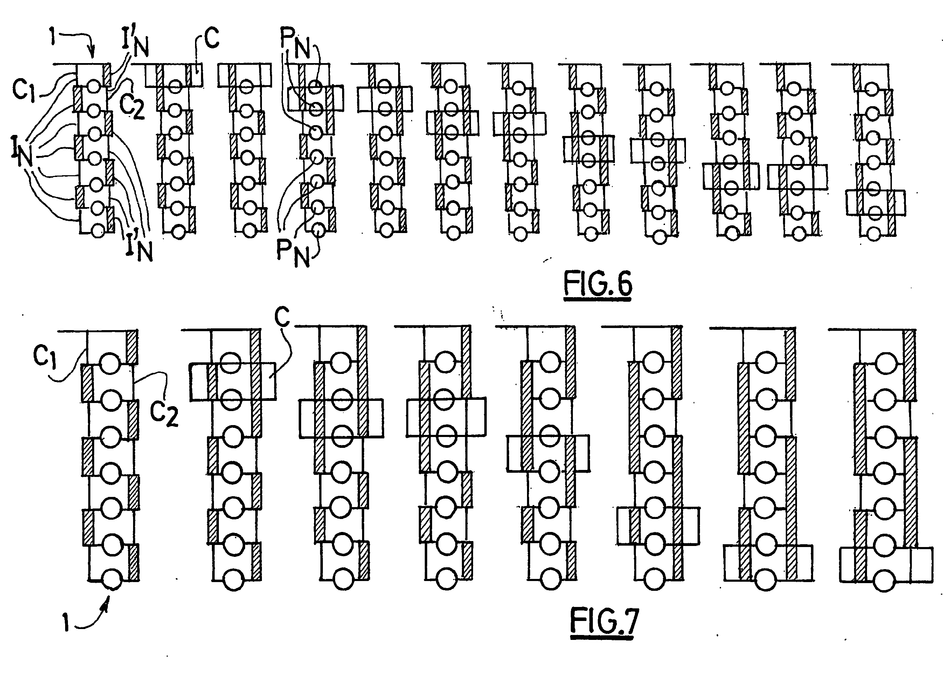

Les figures 7 et 8 représentent les conducteurs C₁ et C₂ du circuit primaire 1. Seuls les sept premiers enroulements P_{N} sont représentés.

Les tronçons de conducteurs C₁ et C₂ en traits gras illustrent des interrupteurs I_{N}, l'_{N} fermés et les tronçons en traits fins des interrupteurs ouverts I_{N}, l'_{N}.

On définit une paire de moyens de commutation comme étant formée de deux moyens de commutation connectés après ou avant un même enroulement.

Les commutations s'effectuent de proche en proche en déplaçant un motif de commutation, symbolisé par un cadre C, le long des paires de moyens de commutation et en inversant éventuellement l'état d'un ou des deux moyens de commutation contenus dans le cadre. Dans le cas de deux inversions, celles-ci sont effectuées successivement.

Ainsi, les moyens de commande commandent successivement chaque paire de moyens de commutation I₁, I'₁, puis I₂, I'₂, ...., I_{N}, l'_{N}. A chaque étape, en fonction du résultat désiré, le moyen de commutation I_{N} est inversé ou non, puis, le moyen de commutation l'_{N} est inversé, ou non.

Ce procédé permet par exemple d'inverser la polarité du circuit primaire, ou pour inverser la polarité de la tension aux bornes de chaque transformateur.

L'exemple représenté sur la figure 6 correspond à l'inversion de la polarité des enroulements primaires qui sont dans une configuration où tous les enroulements primaires P_{N} sont en série. L'inversion de polarité est obtenue en inversant tous les interrupteurs.

Dans l'exemple représenté sur la figure 7, les moyens de commutation sont commutés de façon à passer d'une configuration où tous les moyens de commutation I_{N}, l'_{N} sont en série, à une configuration où les moyens de commutation sont en parallèle deux à deux.

Ce procédé de commande présente les avantages suivants :
- la commutation des interrupteurs est « quasi - douce » : les pertes dynamiques sont en effet divisées environ par quatre ;
- un seul interrupteur commute à la fois, ce qui simplifie la mise en oeuvre, il n'y a donc pas de problèmes liés à la commutation simultanée de semiconducteurs en série ;
- la fréquence apparente vue du primaire est très élevée ;
- l'amplitude de l'ondulation aux bornes du primaire après la self d'entrée est très faible, ce qui permet de diminuer la taille de la self d'entrée ;
- la régulation du courant d'entrée est facilitée car le temps de réponse de la régulation est très court.

Par ailleurs, le courant circulant en permanence dans le circuit selon l'invention, les filtres en entrée et en sortie du circuit seront moins sollicités que dans un circuit classique présentant un courant pulsé important.

Le convertisseur selon l'invention présente l'avantage d'être tolérant à une panne simple : quel que soit le mode de panne d'un interrupteur, d'un transformateur, il est possible de fonctionner en mode dégradé.

On isole alors l'étage en panne en appliquant une commande appropriée sur les interrupteurs. Cela a pour conséquence de limiter les capacités de l'ensemble du circuit (la plage de variation des tensions est réduite) sans que ce dernier cesse de fonctionner.

Par ailleurs, un circuit primaire adoptant la première configuration est bien adapté pour les hautes tensions, car les interrupteurs partagent la tension entre eux. Un circuit secondaire adoptant la deuxième configuration est bien adapté pour les courants de sortie élevés, car les interrupteurs partagent le courant de sortie.

Le circuit électronique selon l'invention présente un domaine d'application vaste en électronique.

L'invention ne se limite pas aux modes de réalisation décrits, et notamment à la valeur de N employée. Cette dernière peut être très variable.

On peut notamment envisager toutes les associations en parallèle et/ou en série des enroulements primaires et/ou secondaires des transformateurs, sans sortir du cadre de l'invention.

La totalité ou une partie des éléments du circuit électronique peut par ailleurs être pilotée par ordinateur pour obtenir l'association voulue de transformateurs.

On va maintenant décrire deux applications particulières de l'invention.

Dans une première application du circuit électronique conforme à l'invention, ce dernier remplace le convertisseur d'énergie disposé dans un véhicule ferroviaire, alimenté indifféremment par une tension continue de 1500V ou 3000V ou une tension alternative de 1000V ou 1500V, ledit convertisseur étant apte à transformer cette tension en une tension propre à alimenter des organes électriques embarqués dans ce véhicule.

En utilisant un circuit électronique selon l'invention à la place des convertisseurs d'énergie connus, il est ainsi possible de supprimer le filtre d'entrée.

En effet, dans les réalisations connues, la norme UIC 550 (Union Internationale des Chemins de fer) impose l'utilisation d'un filtre d'entrée lourd et volumineux constitué d'un condenseur et d'une inductance.

Grâce au circuit électronique selon l'invention, il est possible de supprimer le filtre encombrant ci-dessus, tout en respectant les normes, ce qui permet un gain de poids considérable.

Le générateur d'entrée devient alors un générateur de courant.

Le procédé de commande des interrupteurs régule un courant constant compatible avec la norme UIC 550, créant ainsi une impédance d'entrée élevée.

En dessous de 50Hz, la consigne de courant est adaptée pour ajuster la tension de sortie.

Une autre application du convertisseur est son utilisation en tant que convertisseur chargé d'assurer la fonction traction d'un véhicule ferroviaire, alimenté par une tension alternative de 15 000V ou 25 000V, ledit convertisseur étant apte à transformer cette tension en une tension propre à alimenter des organes électriques embarqués dans ce véhicule. Ledit convertisseur électrique est alors dépourvu de transformateur basse fréquence (50Hz ou 16.7Hz) haute tension d'entrée.

Le convertisseur selon l'invention peut être utilisé dans de nombreux domaines :
- en traction ferroviaire : le transformateur d'entrée et son redresseur atteignent couramment 13 tonnes, alors qu'un convertisseur selon l'invention n'atteindrait que 3 tonnes ;
- applications de moyenne puissance sur différentes tensions de secteur : avec un convertisseur selon l'invention, il n'est plus nécessaire de modifier l'équipement, il suffit de modifier le procédé de commande ;
- alimentations à tension de sortie variable et puissance constante.

## Revendications

1. Convertisseur d'énergie électrique comprenant:
- N transformateurs comprenant chacun un enroulement primaire (P_{N}) et un enroulement secondaire (S_{N}),
- un circuit primaire (1) relié à deux bornes d'entrée (2, 3), sur lequel sont connectés les enroulements primaires (P_{N}) des transformateurs,
- un circuit secondaire (4) relié à deux bornes de sortie (5, 6), sur lequel sont connectés les enroulements secondaires (S_{N}) des transformateurs,
le circuit primaire (1) du convertisseur comprenant un ensemble de moyens de commutation (I_{N}, I_{N}, I_{N,1}, I_{N,2}) connectés aux N enroulements primaires (P_{N}), ***caractérisé* en ce qu'**il comprend un ensemble de moyens de commutation connecté aux N enroulements secondaires (S_{N}), et des moyens de commande (7) des moyens de commutation (I_{N}, I'_{N}, I_{N,1}, I_{N},₂) d'au moins un des circuits primaire (1) ou secondaire (4), les moyens de commutation (I_{N}, I'_{N}, I_{N,1}, I_{N,2}) étant connectés de sorte que l'on peut associer les N enroulements primaires (P_{N}) en série et/ou parallèle avec les N enroulements secondaires (S_{N}) respectivement en parallèle et/ou série en utilisant les moyens de commande (7).

2. Convertisseur selon la revendication 1, **caractérisé en ce que** le circuit primaire (1) comprend un générateur de courant qui alimente les bornes d'entrée (2, 3) et le circuit secondaire (4) comprend un générateur de tension connecté en parallèle aux bornes de sortie (5, 6).

3. Convertisseur selon la revendication 1, **caractérisé en ce que** le circuit primaire (1) comprend un générateur de connecté en parallèle sur les bornes d'entrée (2, 3) et le circuit secondaire (4) comprend un générateur de courant relié aux bornes de sortie (5, 6).

4. Convertisseur selon l'une des revendications 1 à 3, **caractérisé en ce que** chaque circuit primaire (1) ou secondaire (4) peut adopter l'une des deux configurations duales suivantes :
- la première configuration comprend deux conducteurs électriques (C₁, C₂) connectés en parallèle entre les bornes d'entrée (2, 3) ou de sortie (5, 6), chaque conducteur (C₁, C₂) comportant au moins N+1 moyens de commutation (I_{N}, I'_{N}) en série, les deux conducteurs (C₁, C₂) étant reliés entre eux, entre leurs moyens de commutation (I_{N}, I'_{N}) respectifs, par un enroulement primaire (P_{N}) ou secondaire (S_{N}),
- la deuxième configuration comprend N+1 conducteurs électriques (C_{N}) connectés en parallèle entre les bornes d'entrée (2, 3) ou de sortie (5, 6), chaque conducteur (C_{N}) comportant au moins deux moyens de commutation (I_{N.1}, I_{N,2}) en série, les conducteurs (C_{N}) étant reliés entre eux deux à deux entre leurs moyens de commutation (I_{N,1}, I_{N},₂) respectifs par un enroulement primaire (P_{N}) ou secondaire (S_{N}).

5. Convertisseur selon l'une des revendications 3 ou 4, **caractérisé en ce que** lorsque les circuits primaire (1) et secondaire (4) présentent la même configuration, un enroulement sur deux (S_{N}) du circuit secondaire est inversé par rapport à l'enroulement correspondant (P_{N}) du circuit primaire, tous les autres enroulements (P_{N}, S_{N}) étant dans le même sens.

6. Convertisseur selon l'une des revendications 3 ou 4, **caractérisé en ce que** lorsque les circuits primaire (1) et secondaire (4) présentent des configurations différentes, tous les enroulements (P_{N}, S_{N}) sont dans le même sens.

7. Convertisseur selon l'une des revendications 1 à 6, **caractérisé en ce** les moyens de commutation (I_{N}, I'_{N}, I_{N,1}, I_{N},₂) du circuit secondaire (4) et/ou du circuit primaire (1) sont des interrupteurs unidirectionnels ou bidirectionnels.

8. Convertisseur selon l'une des revendications 1 à 7, **caractérisé en ce** les moyens de commande (7) commandent les moyens de commutation (I_{N}, I'_{N}, I_{N,1}, I_{N,2}) du circuit primaire (1) et du circuit secondaire (4) sont des interrupteurs commandés à la fois au primaire et au secondaire.

9. Convertisseur selon l'une des revendications 3 à 8, **caractérisé en ce qu'**il comprend :
- un circuit primaire (1) adoptant la première configuration, les deux conducteurs (C₁, C₂) du circuit primaire étant en parallèle avec une capacité (13) ;
- un enroulement (15) en série avec la capacité (13) ;
- un générateur de tension (16) connecté entre les bornes d'entrée (2, 3) ;
- un circuit secondaire (4) adoptant la première configuration dont les deux conducteurs (C₁, C₂) sont en série avec un enroulement (8) et en parallèle avec une capacité (9) ;
les moyens de commutation (I_{N}, I'_{N}) du circuit secondaire étant des diodes.

10. Convertisseur selon l'une des revendications 3 à 8, **caractérisé en ce qu'**il comprend :
- un circuit primaire (1) adoptant la deuxième configuration, dans lequel les moyens de commutations (I_{N,1}, I_{N,2}) sont des interrupteurs unidirectionnels en parallèle chacun avec une diode ;
- un circuit secondaire (4) adoptant la deuxième configuration dans lequel les moyens de commutation (I_{N,1}, I_{N,2}) sont des diodes ;
- une capacité (19) en parallèle avec les bornes de sortie (5, 6) ;
- un enroulement (18) en série avec une des bornes de sortie (5, 6).

11. Application du convertisseur conforme à l'une des revendications 1 à 10, en tant que convertisseur d'énergie disposé dans un véhicule ferroviaire, alimenté par une tension continue de 1500V ou 3000V ou une tension alternative de 1000V ou 1500V, ledit convertisseur étant apte à transformer cette tension en une tension propre à alimenter des organes électriques embarqués dans ce véhicule, **caractérisée en ce que** ledit convertisseur électrique est dépourvu de filtre d'entrée.

12. Application du convertisseur conforme à l'une des revendications 1 à 10, en tant que convertisseur chargé d'assurer la fonction traction d'un véhicule ferroviaire, alimenté par une tension alternative de 15 000V ou 25 000V, ledit convertisseur étant apte à transformer cette tension en une tension propre à alimenter des organes électriques embarqués dans ce véhicule, **caractérisée en ce que** ledit convertisseur électrique est dépourvu de transformateur basse fréquence haute tension d'entrée.

13. Procédé de commande d'un convertisseur conforme à la revendication 4 ou l'une des revendications 5 à 9 quand dépendates de la revendicaton 4, dans lequel le circuit primaire présente la première configuration, une paire de moyens de commutation correspondant à deux moyens de commutation connectés avant ou après un même enroulement, **caractérisé en ce qu'**il comprend les étapes consistant à déplacer un motif de commutation successivement le long des paires de moyens de commutation du circuit primaire et, pour chaque paire de moyens de commutation, à inverser éventuellement l'état d'un des moyens de commutation de la paire ou successivement l'état des deux moyens de commutation de la paire.

## Claims

1. An electric energy transducer including:
- N transformers including each a primary winding (P_{N}) and a secondary winding (S_{N}),
- a primary circuit (1) connected to two input terminals (2, 3) to which the primary windings (P_{N}) of the transformers are connected,
- a secondary circuit (4) connected to two output terminals (5, 6) to which the secondary windings (S_{N}) of the transformers are connected,
the primary circuit (1) of the transducer including a set of switching means (I_{N}, I'_{N}, I_{N,1}, I_{N,2}) connected to the N primary windings (P_{N}), **characterised in that** it includes a set of switching means connected to the N secondary windings (S_{N}) and means for controlling (7) switching means (I_{N}, I'_{N}, I_{N,1}, I_{N,2}) of at least one of the primary (1) or secondary (4) circuits, with the switching means (I_{N}, I'_{N}, I_{N,1}, I_{N,2}) being so connected that the N primary windings (P_{N}) can be associated in series and/or in parallel with the N secondary windings (S_{N}) respectively in parallel and/or in series using the control means (7).

2. A transducer according to claim 1, **characterised in that** the primary circuit (1) includes a current generator supplying the input terminals (2, 3) and the secondary circuit (4) includes a voltage generator connected in parallel to the outlet terminals (5, 6).

3. A transducer according to claim 1, **characterised in that** the primary circuit (1) includes a current generator connected in parallel to the inlet terminals (2, 3) and the secondary circuit (4) includes a current generator connected to the outlet terminals (5, 6).

4. A transducer according to one of claims 1 to 3, **characterised in that** each primary (1) or secondary (4) circuit can adopt one of the two following dual configurations:
- the first configuration includes two electric conductors (C₁, C₂) connected in parallel between the input (2, 3) or output (5, 6) terminals, each conductor (C₁, C₂) including at least N+1 switching means (I_{N}, I'_{N}) in series, both conductors (C₁, C₂) being connected together between the respective switching means (I_{N}, I'_{N}) thereof through a primary (P_{N}) or secondary (S_{N}) winding,
- the second configuration includes N+1 electric conductors (C_{N}) connected in parallel between the input (2, 3) or output (5, 6) terminals, with each conductor (C_{N}) including at least two switching means (I_{N,1}, I_{N,2}) in series, with the conductors (C_{N}) being connected together in pairs between the respective switching means (I_{N,1}, I_{N,2}) through a primary (P_{N}) or secondary (S_{N}) winding.

5. A transducer according to one of claims 3 or 4, **characterised in that** when the primary (1) and secondary (4) circuits have the same configuration, one winding out of two (S_{N}) of the secondary circuit is reverted with respect to the matching winding (P_{N}) in the primary circuit, with all the other windings (P_{N}, S_{N}) being in the same direction.

6. A transducer according to one of claims 3 or 4, **characterised in that** when the primary (1) and secondary (4) circuits have different configurations, all the windings (P_{N}, S_{N}) are in the same direction.

7. A transducer according to one of claims 1 to 6, **characterised in that** the switching means (I_{N}, I'_{N}, I_{N,1}, I_{N,2}) of the secondary circuit (4) and/or the primary circuit (1) are unidirectional or bidirectional switches.

8. A transducer according to one of claims 1 to 7, **characterised in that** the control means (7) which control the switching means (I_{N}, I'_{N}, I_{N,1}, I_{N,2}) of the primary circuit (1) and the secondary circuit (4) are switches controlled both at the primary and at the secondary level.

9. A transducer according to claims 3 to 8, **characterised in that** it includes:
- a primary circuit (1) adopting the first configuration, with both conductors (C₁, C₂) of the primary circuit being in parallel with an anode capacity (13);
- a winding (15) in series with the anode capacity (13);
- a voltage generator (16) connected between the input terminals (2, 3);
- a secondary circuit (4) adopting the first configuration both conductors of which (C₁, C₂) are in series with one winding (8) and in parallel with one anode capacity (9);
the switching means (I_{N}, I'_{N}) of the secondary circuit being diodes.

10. A transducer according to one of claims 3 to 8, **characterised in that** it includes:
- a primary circuit (1) adopting the second configuration, wherein the switching means (I_{N,1}, I_{N,2}) are unidirectional switches each in parallel with a diode;
- a secondary circuit (4) adopting the second configuration, wherein the switching means (I_{N,1}, I_{N,2}) are diodes;
- an anode capacity (19) in parallel with the output terminals (5, 6);
- a winding (18) in series with one of the output terminals (5, 6).

11. An application of the transducer according to one of claims 1 to 10, as an energy transducer positioned in a rail vehicle supplied with a continuous voltage of 1,500V or 3,000V or an alternative voltage of 1,000V or 1, 500V, with said transducer being capable of transforming such voltage into a voltage capable of supplying electric members aboard such a vehicle, **characterised in that** said electric transducer has no input filter.

12. An application of the transducer according to one of claims 1 to 10, as a transducer in charge of providing the traction function of a rail vehicle, supplied with an alternating voltage of 15,000V or 25,000V, with said transducer being capable of transforming such voltage into a voltage sufficient for supplying electric members aboard such vehicle, **characterised in that** said electric transducer has no input high voltage low frequency transformer.

13. A method for controlling a transducer according to claim 4 or one of claims 5 to 9 when they depend on claim 4, wherein the primary circuit has the first configuration, with a pair of switching means corresponding to two switching means connected upstream or downstream of the same winding, **characterised in that** it includes steps consisting in moving a switching pattern successively along the pairs of the switching means of the primary circuit and, for each pair of the switching means, in reverting the condition of one of the switching means in the pair or successively the condition of both switching means in the pair.

## Patentansprüche

1. Stromenergiewandler, der folgende Teile umfaßt:
- N Transformatoren, die jeweils eine Primärwicklung (P_{N}) und eine Sekundärwicklung (S_{N}) umfassen,
- einen mit zwei Eingangsanschlüssen (2, 3) verbundenen Primärschaltkreis (1), auf dem die Primärwicklungen (P_{N}) der Transformatoren angeschlossen sind,
- einen mit zwei Ausgangsanschlüssen (5, 6) verbundenen Sekundärschaltkreis (4), auf dem die Sekundärwicklungen (S_{N}) der Transformatoren angeschlossen sind,
wobei der Primärschaltkreis (1) des Wandlers eine Reihe von Schaltmitteln (I_{N}, I'_{N}, I_{N,1}, I_{N,2}) umfaßt, die an die N Primärwicklungen (P_{N}) angeschlossen sind, **dadurch gekennzeichnet, daß** er eine Reihe von Schaltmitteln umfaßt, die an die N Sekundärwicklungen (S_{N}) angeschlossen sind, und Steuermittel (7) der Schaltmittel (I_{N,} I'_{N}, I_{N.1}, I_{N.2}) von mindestens einem des Primärschaltkreises (1) oder des Sekundärschaltkreises (4), wobei die Schaltmittel (I_{N}, I'_{N,} I_{N.1}, I_{N.2}) so angeschlossen sind, daß die N Primärwicklungen (P_{N}) unter Benutzung der Steuermittel (7) seriell und/oder parallel mit den N geschalteten Sekundärwicklungen (S_{N}) parallel und/oder seriell verbunden werden können.

2. Wandler nach Anspruch 1, **dadurch gekennzeichnet, daß** der Primärschaltkreis (1) einen Stromgenerator umfaßt, der die Eingangsanschlüsse (2, 3) speist, und der Sekundärschaltkreis (4) einen Spannungsgenerator umfaßt, der parallel an die Ausgangsanschlüsse (5, 6) angeschlossen ist.

3. Wandler nach Anspruch 1, **dadurch gekennzeichnet, daß** der Primärschaltkreis (1) einen Spannungsgenerator umfaßt, der parallel an die Eingangsanschlüsse (2, 3) angeschlossen ist, und der Sekundärschaltkreis (4) einen Stromgenerator umfaßt, der an die Ausgangsanschlüsse (5, 6) angeschlossen ist.

4. Wandler nach einem der Ansprüche 1 bis 3, **dadurch gekennzeichnet, daß** jeder Primärschaltkreis (1) oder Sekundärschaltkreis (4) eine der beiden nachstehenden dualen Konfigurationen annehmen kann:
- die erste Konfiguration umfaßt zwei elektrische Leiter (C₁, C₂), die parallel zwischen den Eingangsanschlüssen (2, 3) oder Ausgangsanschlüssen (5, 6) angeschlossen sind, wobei jeder Leiter (C₁, C₂) mindestens N + 1 serielle Schaltmittel (I_{N}, I'_{N}) umfaßt, wobei die beiden Leiter (C₁, C₂) untereinander zwischen ihren jeweiligen Schaltmitteln (I_{N}, I'_{N}) durch eine Primärwicklung (P_{N}) oder Sekundärwicklung (S_{N}) verbunden sind,
- die zweite Konfiguration umfaßt N + 1 elektrische Leiter (C_{N}), die parallel zwischen den Eingangsanschlüssen (2, 3) oder den Ausgangsanschlüssen (5, 6) angeschlossen sind, wobei jeder Leiter (C_{N}) mindestens zwei serielle Schaltmittel (I_{N.1}, I_{N.2}) umfaßt, wobei die Leiter (C_{N}) untereinander jeweils zu zweit durch eine Primärwicklung (P_{N}) oder Sekundärwicklung (S_{N}) zwischen ihren jeweiligen Schaltmitteln (I_{N.1}, I_{N.2}) verbunden sind.

5. Wandler nach einem der Ansprüche 3 oder 4, **dadurch gekennzeichnet, daß**, wenn der Primärschaltkreis (1) und der Sekundärschaltkreis (4) die gleiche Konfiguration aufweisen, jede zweite Wicklung (S_{N}) des Sekundärschaltkreises im Verhältnis zur entsprechenden Wicklung (P_{N}) des Primärschaltkreises umgekehrt ist, wobei alle anderen Wicklungen (P_{N}, S_{N}) in der gleichen Richtung verlaufen.

6. Wandler nach einem der Ansprüche 3 oder 4, **dadurch gekennzeichnet, daß**, wenn der Primärschaltkreis (1) und der Sekundärschaltkreis (4) unterschiedliche Konfigurationen aufweisen, alle Wicklungen (P_{N}, S_{N}) in der gleichen Richtung verlaufen.

7. Wandler nach einem der Ansprüche 1 bis 6, **dadurch gekennzeichnet, daß** die Schaltmittel (I_{N}, I'_{N}, I_{N.1}, I_{N.2}) des Sekundärschaltkreises (4) und/oder des Primärschaltkreises (1) in einer Richtung wirkende oder in zwei Richtungen wirkende Schalter sind.

8. Wandler nach einem der Ansprüche 1 bis 7, **dadurch gekennzeichnet, daß** die Steuermittel (7) die Schaltmittel (I_{N}, I'_{N}, I_{N.1}, I_{N.2}) des Primärschaltkreises (1) und des Sekundärschaltkreises (4) steuern und Schalter sind, die sowohl an der Primärseite als auch an der Sekundärseite gesteuert werden.

9. Wandler nach einem der Ansprüche 3 bis 8, **dadurch gekennzeichnet, daß** er folgende Teile umfaßt:
- einen Primärschaltkreis (1), der die erste Konfiguration annimmt, wobei die zwei Leiter (C₁, C₂) des Primärschaltkreises parallel mit einer Kapazität (13) sind;
- eine Wicklung (15) seriell mit der Kapazität (13);
- einen Spannungsgenerator (16), der zwischen den Eingangsanschlüssen (2, 3) angeschlossen ist;
- einen Sekundärschaltkreis (4), der die erste Konfiguration annimmt, dessen zwei Leiter (C₁, C₂) seriell mit einer Wicklung (8) und parallel mit einer Kapazität (13) sind;
Wobei die Schaltmittel (I_{N}, I'_{N}) des Sekundärschaltkreises Dioden sind.

10. Wandler nach einem der Ansprüche 3 bis 8, **dadurch gekennzeichnet, daß** er folgende Teile umfaßt:
- einen Primärschaltkreis (1), der die zweite Konfiguration annimmt, bei dem die Schaltmittel (I_{N.1}, I_{N.2}) in einer Richtung wirkende Schalter sind, die jeweils parallel mit einer Diode sind;
- einen Sekundärschaltkreis (4), der die zweite Konfiguration annimmt, bei dem die Schaltmittel (I_{N.1}, I_{N.2}) Dioden sind;
- eine Kapazität (19) parallel mit den Ausgangsanschlüssen (5, 6);
- eine Wicklung (18) seriell mit einer der Ausgangsanschlüsse (5, 6).

11. Anwendung des Wandlers nach einem der Ansprüche 1 bis 10 als Energiewandler, der in einem Schienenfahrzeug angeordnet ist und mit einer Gleichspannung von 1.500 V oder 3.000 V oder einer Wechselspannung von 1.000 V oder 1.500 V gespeist wird, wobei der besagte Wandler geeignet ist, diese Spannung in eine solche Spannung umzuwandeln, die die in diesem Fahrzeug mitgeführten elektrischen Organe speisen kann, **dadurch gekennzeichnet, daß** der besagte Stromwandler kein Eingangsfilter hat.

12. Anwendung des Wandlers nach einem der Ansprüche 1 bis 10 als Wandler, der die Zugfunktion eines Schienenfahrzeugs sicherstellen soll, der mit einer Wechselspannung von 15.000 V oder 25.000 V gespeist wird, wobei der besagte Wandler geeignet ist, diese Spannung in eine solche Spannung umzuwandeln, die die in diesem Fahrzeug mitgeführten elektrischen Organe speisen kann, **dadurch gekennzeichnet, daß** der besagte Stromwandler keinen Niederfrequenztransformator für Eingangshochspannung hat.

13. Verfahren für das Steuern eines Wandlers nach Anspruch 4 oder nach einem der Ansprüche 5 bis 9, wenn sie vom Anspruch 4 abhängen, bei dem der Primärschaltkreis die erste Konfiguration aufweist, wobei ein Paar Schaltmittel zwei vor oder nach einer gleichen Wicklung angeschlossenen Schaltmitteln entspricht, **dadurch gekennzeichnet, daß** es die Schritte umfasst, die darin bestehen, ein Schaltmuster nacheinander entlang den Paaren von Schaltmitteln des Primärschaltkreises zu versetzen und für jedes Paar Schaltmittel eventuell den Zustand eines der Schaltmittel des Paares oder nacheinander den Zustand der beiden Schaltmittel des Paares umzukehren.
